# EUROPEAN PATENT APPLICATION

(11) **EP 1 455 407 A2**
(43) Date of publication of application: **08.09.2004**
(21) Application number: 04290118.1
(22) Date of filing: 16.01.2004
(51) Int. Cl.: H01M 8/10, B01D 71/00, C08J 5/22, H01M 10/40, H01M 6/18

(54) **Non-perfluoropolymer resins containing ionic or ionizable groups and products containing the same**

(30) Priority: 06.03.2003 US 383026
(71) Applicant: Atofina Chemicals, Inc., Philadelphia, PA 19103-3222 (US)
(72) Inventor: Lofti, Hedhli, Ardmore Pennsylvania 19003 (US); Decker, Isabelle, 38120 Fontanil Cornillon (FR); Amort, Holger Erns, Mobile Alabama 36695 (US); Iyer, Jyostna, Sunnyvale California 94087 (US); Gaboury, Scott Richard, Blue Bell Pennsylvania 19422 (US)
(74) Representative: Neel, Henry

(57) **Abstract**

A non-perfluoropolymer is described which contains at least one acrylic resin or vinyl resin having at least one ionic or ionizable group and optionally at least one additional polymer. Preferably, the polymers are useful in a variety of applications including in the formation of a membrane which is useful in batteries and fuel cells and the like. Methods of making the polymer blends are also described.

## Description

### BACKGROUND OF THE INVENTION

The present invention relates to polymeric resins and more specifically to non-perfluorinated polymeric resins containing ionic and/or ionizable groups (and also referred to as "non-perfluorinated polyelectrolyte"), which are useful in a variety of products such as polyelectrolyte membranes and other thermoplastic articles. The present invention further relates to methods of making these resins as well as using these resins.

Perfluorocarbon ionic exchange membranes provide high cation transport, and have been extensively used as ionic exchange membranes. Polymeric ion exchange membranes can be referred to as solid polymer electrolytes or polymer exchange membranes (PEM). Because of the severe requirements, the most commonly used membranes, and commercially available, are made from perfluorosulfonated Nafion® and Aciplex® polymers. However, reports and literature describe these membranes as working well but show several limitations that prevent developing the technology further to commercialization. Additionally, they work better with gaseous fuels than with liquid fuels which may be mainly due to fuel crossover that diminishes cell performance. A membrane's chemical resistance and mechanical strength are important properties for fuel cell applications. Indeed, the membrane is often subjected to high differential pressure, hydration-dehydration cycles, as well as other conditions. Also, mechanical strength becomes important when the membrane is very thin such as less than 50 microns. Further, when used with fuel cells or battery applications, the membrane sits in a very acidic medium at temperatures that can reach 200°C, in an oxidizing and/or reducing environment due to the presence of metal ions and sometimes presence of solvents. This environment requires that the membrane be chemically and electrochemically resistant, as well as thermally stable.

Currently, many fluorine-containing membranes can suffer from one or more of the following short comings:
i) high liquid and gas crossover through the membrane;
ii) heterogeneous blending between the fluorinated polymer and other polymers that leads to inferior properties;
iii) insufficient chemical resistance in the presence of some liquid fuels;
iv) poor electrochemical resistance
v) lack of heterogeneous distribution of sulfonated groups;
vi) poor mechanical properties; and/or
vii) poor thermal stability.

U.S. Patent No. 4,295,952 to de Nora et al. relates to cationic membranes which have partly sulfonated tripolymers of styrene, divinylbenzene, and at least one of 2-vinylpyridine, 4-vinylpyridine, and/or acrylic acid.

U.S. Patent No. 5,679,482 to Ehrenberg et al. relates to fuel cells incorporating an ion-conducting membrane having ionic groups. The polymer forming the membrane contains styrene which has been sulfonated using a sulfonation agent. The sulfonation can take place with the monomer or polymer.

U.S. Patent No. 5,795,668 describes a fuel cell containing a MEA with a reinforced polymeric ion exchange membrane (PEM) using Nafion™ type polymers. The PEM is based on a fluorinated porous support layer and a reinforced ion exchange membrane with an equivalent weight of about 500 to 2000 and a preferred ion exchange capacity of from 0.5 to 2 meq/g dry resin. The porous support layer is made of certain PTFE and PTFE copolymers. The membrane is a perfluorinated polymer with side chains containing -CF₂ CF₂ SO₃H. It is known from the literature that Nafion® type polymers can have mechanical failure in methanol fuel cells as well as problems with liquid crossover.

WO 97/41168 to Rusch relates to a multi-layered ion-exchange composite membrane having ionic exchange resins, such as fluorinated or non-fluorinated polystyrene based sulfonates and sulfonated polytetrafluoroethylenes.

WO 98/20573 A1 describes a fuel cell containing a highly fluorinated lithium ion exchange polymer electrolyte membrane (PEM). The PEM is based on an ion exchange membrane which is imbibed with an aprotic solvent.

WO 98/22989 describes a polymeric membrane containing polystyrene sulfonic acid and poly(vinylidene fluoride), which provides reduced methanol crossover in direct methanol fuel cell (DMFC) use. However, the polymer blending process described does not provide an acceptable blend and the sulfonation steps are complicated.

Holmberg et al., (J. Material Chem. (1996 6(8), 1309) describes the preparation of proton conducting membranes by irradiation grafting of styrene onto PVDF films, followed by sulfonation with chlorosulfonic acid. In the present invention, a sulfonation step is not required since the sulfonated group can be incorporated using a sulfonated monomer.

U.S. Patent No. 6,252,000 relates to a blend of fluorinated ion exchange/non-functional polymers. Specific examples include perfluorinated sulfonyl fluoride polymer/poly(CTFE-co-perfluorodioxolane) blends.

WO 99/67304 relates to an aromatic perfluorinated ionomer prepared by the copolymerization of sulfonated aromatic perfluorinated monomer with acrylic monomers. The sulfonated group that is present is in the fluorinated aromatic chain of the polymer.

U.S. Patent No. 6,025,092 relates to a perfluorinated ionomer wherein a VDF monomer is polymerized with a sulfonated monomer.

Furthermore, sulfonated acrylic or sulfonated vinylic polymers are described for use in super absorbents, diapers, and contact lenses, for instance (J. Meter. Chem. 1996, 6(a), 1309 and Ionics 3, 214(1997). However, such type of products have not been described for application as membranes for polyelectrolyte membranes and the like. All patents, publications, and applications mentioned above and throughout this application are incorporated by reference in their entirety and form a part of the present application.

Thus, there is a need to overcome one or more of these limits and to develop a membrane that can be used for applications in liquid fuel cells. Thus, there is a need to overcome one or more of these limits and to develop a membrane that can be used for applications in liquid fuel cells. More particularly, there is a need to develop a non-perfluorinated polyelectrolyte to make membranes directly from aqueous or non-aqueous dispersions. Also, there is a need to provide compositions and methods of synthesis as well as methods of using water or non-aqueous dispersions of non-perfluorinated polyelectrolyte having sulfonated or other functionalities. Further, there is a need to provide a method that is easier and environmentally friendly. In addition, those skilled in the art would prefer a polyelectrolyte membrane having a higher chemical resistance and mechanical strength. In addition, those skilled in the art would prefer a polyelectrolyte membrane having a higher chemical resistance and mechanical strength.

### SUMMARY OF THE INVENTION

Accordingly, a feature of the present invention is to provide non-perfluorinated polyelectrolytes, having ionic functionalities.

Another feature of the present invention is to provide a non-perfluorinated polyelectrolyte membrane having high chemical resistance and/or mechanical strength.

Another feature of the present invention is to provide polymers that can be formed as a component in non-perfluorinated polyelectrolyte membranes that avoid one or more of the shortcomings described above, such as avoiding a high liquid crossover through the membrane.

Another feature of the present invention is to provide membranes that can be made directly from a dispersion of a polymer.

Another feature of the present invention is to provide non-perfluorinated polyelectrolyte without separate sulfonation steps.

To achieve these and other advantages and in accordance with the purpose of the present invention, as embodied and broadly described herein, the present invention relates to a polymer or polymer blend containing at least one acrylic resin and/or vinyl resin, wherein the acrylic and/or vinyl resin has at least one ionic or ionizable group, such as a sulfonated group wherein the polymer has equivalent weight of from about 200 to about 4,000.

The present invention also relates to a composition that includes the polymer product of blending: a) at least one polymer having acrylic and/or vinyl units and at least one ionic or ionizable group; and b) optionally at least one additional polymer, wherein a) and b) are different. The additional polymer can be any compatible polymer, such as a thermoplastic polymer (e.g., a thermoplastic non-fluoropolymer or fluoropolymer).

The present invention further relates to a composition comprising the polymer product of
a) at least one polymerizable acrylic and/or vinyl containing monomer(s) and at least one monomer comprising at least one ionic or ionizable group, or both; in the presence of a dispersing medium, wherein the polymer has an EW of from about 200 to about 4,000, and preferably from about 200 to about 1,400.

Also, the present invention relates to a preferred method of making the above-described compositions, involving conducting a polymerization of at least one polymerizable acrylic and/or vinyl containing monomer and at least one monomer containing at least one ionic or ionizable group in a dispersing medium.

The present invention further relates to a non-perfluorinated polyelectrolyte membrane containing the polymers or compositions of the present invention and also relates to a fuel cell and battery containing the membrane of the present invention.

In addition, the present invention relates to a membrane electrode assembly including the above-mentioned membrane, and relates to a fuel cell using this membrane electrode assembly.

### DETAILED DESCRIPTION OF THE PRESENT INVENTION

Perfluorinated polyelectrolyte membranes are used to provide high cation transport, and have been extensively used as ion exchange membranes. Polymeric ion exchange membranes are referred to as solid polymer electrolytes or polymer exchange membrane (PEM).

The most commonly used membrane, and commercially available, are Nafion® and Aciplex®. However, there are very few non-perfluorinated polyelectrolyte membranes described in the literature. This is due to the fact that the membrane's chemical resistance, electrochemical resistance and mechanical strength are important properties for a fuel cell application. Indeed, the membrane is often subject to high differential pressure. In addition, mechanical strength becomes important when the membrane is very thin (less than 50 microns). When used for fuel cell or battery application, the membrane sits in a very acidic medium at temperatures that could reach 200°C, and in the presence of metal ions, solvents, and the like, thus requiring high chemical resistance as well as electrochemical resistance. Those requirements are often met when a fluorinated base is used because fluorinated materials have inherent chemical and electrochemical resistance. However, these membranes show limitations including but not limited to poor mechanical properties at elevated temperatures (70-200 C range), crossover, and mechanical failure after repeated hydration-dehydration cycling. Additionally, preparing those perfluorinated polyelectrolytes requires several steps and involved chemistry that induces a high cost. Developing a chemistry that's easy and cheap will further alleviate commercialization barriers for fuel cells.

The present invention relates to a non-perfluorinated polyelectrolyte which contains at least one acrylic and/or vinyl resin or polymer which bears at least one ionic or ionizable group, such as a sulfonated and/or phosphonated group. The polymer or blend thereof does not contain a perfluoropolymer, and preferably no fluoropolymers. In one embodiment, the non-perfluorinated polyelectrolyte is present with no other polymers (i.e., it is not present as a blend, or put another way, the non-perfluorinated polyelectrolyte is used alone). In another embodiement, the non-perfluorinated polyelectrolyte is present with one or more other polymers, for instance, as a blend, such as with thermoplastic non-perfluoropolymers. By perfluoro, it is to be understood that all hydrogens that are attached to carbon atoms are completely replaced with fluorine. In the present invention, this is not the case. As an option, some of the hydrogens can be replaced with fluorine but not all of them. Thus, partial fluorination is possible or no fluorination at all.

The present invention also relates to the resulting product from blending a) a non-perfluorinated polyelectrolyte having acrylic or vinyl units or both and at least one ionic or ionizable group and b) at least one additional polymer wherein a) and b) are different from one another.

The present invention further relates to a composition comprising the polymer product of at least one polymerizable vinyl and/or acrylic containing monomer and at least one monomer comprising at least one ionic or ionizable group or both wherein the polymerization preferably occurs in the presence of an aqueous dispersion.

With respect to the acrylic resin or polymer, this polymer or resin preferably contains or bears one or more ionic or ionizable groups. Examples of acrylic resins include polymers (including copolymers, terpolymers, oligomers, and the like) of acrylic acids, methacrylic acids, esters of these acids, or acrylonitrile. The acrylic resin can also contain other repeating units as well as combinations of different acrylic acid alkyl esters, methacrylic acid alkyl esters, acrylic acids, methacrylic acids, and acrylonitriles. For purposes of the present invention, the acrylic resin can include other polymerized monomers or can be a mixture of two or more different acrylic resins or can additionally include non-acrylic resins, such vinyl monomers and styrenic monomers.

Examples of vinyl monomers that can be used in the non-perfluorinated polyelectrolyte include, but are not limited to, styrene, vinyl acetate, vinyl ethers, vinyl esters such as VeoVa 9 and VeoVa 10 from Shell, vinyl propionate, vinyl pivalate, vinyl benzoate, vinyl stearate, and the like, and any combinations thereof.

Furthermore, the non-perfluorinated polyelectrolyte contains at least one ionic (e.g., sulfonate or phosphonate) or ionizable group such as a sulfonated or phosphonated group or sulfonyl groups. An ionizable group is a group capable of forming an ionic group, such as cyclic amino acids, sultones, maleic anhydride, mercaptans, sulfides, phosphalanes, and the like. These groups can be part of the non-perfluorinated polyelectrolyte by any means such as blending an acrylic and/or vinylic resin in the presence of one or more monomers containing an ionic or ionizable group. In the alternative, one or more of the monomers used to form the non-perfluorinated polyelectrolyte can contain the ionic or ionizable group.

Besides the components mentioned above with respect to the acrylic and/or vinylic resin, the acrylic and/or vinylic resin can further contain or be formed in the additional presence of one or more additional monomers optionally with any type of functional group as long as these monomers are compatible with the overall formation of the acrylic and/or vinylic resin.

As stated earlier, preferably the acrylic and/or vinylic resin is the result of the polymerization of several monomers, one of which contains the ionic or ionizable group, and the other which contains the acrylic and/or vinylic units of the acrylic and/or vinylic resin. More preferably, the acrylic and/or vinylic resin is formed from polymerizing (1) acrylic acid alkyl esters, (2) methacrylic acid alkyl esters, (3) one or more co-polymerizable monomers which are different from (1) and (2), (4) one or more monomers having at least one functional group, (5) a monomer containing ionic or ionizable groups, such as a sulfonated or phosphonated monomer.

Examples of the acrylic acid ester (1) include, for example, ethyl acrylate, methyl acrylate, butyl acrylate, propyl acrylate, isobutyl acrylate, amyl acrylate, 2-ethylhexyl acrylate, hexyl acrylate, fluoroalkyl acrylates, and combinations thereof.

Examples of the methacrylic acid ester (2) include, for example, ethyl methacrylate, methyl methacrylate, butyl methacrylate, propyl methacrylate, isobutyl methacrylate, amyl methacrylate, 2-ethylhexyl methacrylate, hexyl methacrylate, fluoroalkylmethacrylate, and combinations thereof.

Examples of the functional monomer (4) include, but are not limited to, α, β unsaturated carboxylic acids (e.g., acrylic acid, methacrylic acid, fumaric acid, crotonic acid, itaconic acid); vinyl ester compounds, amide compounds (e.g., acrylamide, methacrylamide, N-methylmethacrylamide, N-methylolmethacrylamide, N-alkylacrylamide, N-alkylacryl methamide, N-dialkyl methacrylamide, N-dialkyl acrylamide); monomers containing hydroxyl group (e.g., hydroxyethyl methacrylate, hydroxyethyl acrylate, hydroxypropyl acrylate, hydroxypropyl methacrylate, diethylene glycol ethyl ether acrylate); monomers containing epoxy groups (e.g., glycidyl acrylate, glycidyl methacrylate), monomers containing silanols (e.g., γtrimethoxysilane methacrylate, γtriethoxysilane methacrylate); monomer containing aldehydes (e.g., acrolein), alkenyl cyanides (e.g., acrylonitrile, methacrylonitrile). The monomers included in (4) can be capable of crosslinking. Examples of copolymerizable monomers capable of crosslinking include isobutyl methacrylamide, glycidyl methacrylate, diethylene glycol dimethacrylate, and trimethyloxysilane methacrylate. Crosslinking might be desirable for improved mechanical properties and solvent resistance.

For some specific applications, low molecular weight copolymerizable polymers or oligomers can be used. Moreover, when a mixture of acrylic acid alkyl ester (1) and methacrylic acid alkyl ester (2) is used, their ratio could be suitably adjusted to achieve the desired properties.

Examples of the monomer containing at least one ionic or ionizable group (5) include, but are not limited to, acrylamid propyl sulfonate, vinyl phosphonic acid, vinyl sulfonic acid, sulfopropyl methacrylate, sulfoethyl methacrylate. These monomers can preferably be used either in their acid form or as a salt derivative. For example, in a seeded emulsion polymerization, the sulfonated monomer can be incorporated in either the first stage or the second stage or both stages. The amount of the ionic group is preferably from about 200 to about 2500 EW, and more preferably from about 200 to about 1100 EW, wherein EW is equivalent weight and is the number of grams of polymer per sulfonated unit.

The polymer of the present invention which contains at least one acrylic or vinyl resin or both having at least one ionic or ionizable group preferably has an equivalent weight with respect to the acrylic or vinyl resin of from about 200 to about 4,000 and more preferably from about 200 to about 1,400. This preferred equivalent range provides preferred properties with respect to membrane formation and the ability to avoid the need for fluoropolymers. The polymer of the present invention can optionally be formed as a blend. Preferably, the polymer of the present invention is crosslinked using conventional crosslinking techniques.

Crosslinking can be done via conventional methods including, but not limited to, selfcondensation, addition of a secondary crosslinker, or radiation crosslinking. These are well described in the literature and well known in the art. Examples of monomers able to undergo self condensation crosslinking include N-methylol acrylamide, isobutoxy methacrylamide, N-méthylènebisacrylamide, and glycidyl methacrylate. Examples of secondary crosslinkers include isocyanates, melamines, epoxies, carboxylates, alkoxy silanes, silicones, aziridines, and carbodiimides. Examples of radiation crosslinking include electron beam, ultraviolet, and gamma radiation.

The polymerization of the mixture of polymerizable vinyl and/or acrylic containing monomers can be carried out separately and then blended with one or more polymer(s), or polymerized in the presence of one or more polymers. The polymerization of the vinyl and/or acrylic containing monomers can be prepared by solution, bulk, emulsion polymerizations, or any other known polymerization methods.

If the polymerization of the mixture of polymerizable vinyl and/or acrylic ionic containing monomer is carried out separately, and then blended with one or more polymers, the blending can be carried out through various conventional ways including, but not limited to, solution blending, extrusion blending, latex blending, and the like. For solution blending, the polymer can be dissolved or dispersed in a solvent. The solvent used for the polymer can be similar or different than the solvent used for the acrylic/vinyl ionic containing polymer. For example, the blending could involve two solvent solutions/dispersions, or a powder added to a solvent solution/dispersion, or the two polymers in the same solvent, or any other combination. Typical solvents used include tetrahydrofurane, acetone, dimethylsulfoxide, dimethylformamide, N-methyl pyrrolidinone. For melt extrusion blending, typical extrusion temperatures range between about 100° C to about 300° C, preferably from about 150° C to about 250° C. The material could be extruded such as in the shape of pellets or films. For the case of latex blending, the mixing can take place under various conventional ways: the acrylic/vinyl latex can be mixed with the polymer latex, or the acrylic/vinyl polymer can be dispersed or dissolved in the polymer latex, or any other known mixing. The mixing could involve more than two latexes. The quantity and nature of each latex is adjusted in such a way that the physical and chemical properties expected are obtained, and the expected EW is obtained. In the case of a waterborne membrane (e.g., prepared by direct latex case) the particle size and solids content of one or more latexes can be tailored to the desired properties.

For solvent polymerization, the polymerization can take place using conventional techniques. In the case of a blend with another polymer, the solvent used for the polymer blend can be similar or different than the solvent used for the acrylic/vinyl polymer. For example, the blending could involve two solvent solutions/dispersions, or a powder added to a solvent solution/dispersion, or the two polymers in the same solvent, or any other combination. Typical solvents used include dimethylsulfoxide, dimethylformamide, N-methyl pyrrolidinone, isopropanol, methanol, and the like.

The emulsion polymerization can be carried out under the same conditions as for conventional emulsion polymerizations. A surfactant, a polymerization initiator, a chain transfer agent, a pH regulator, and eventually a solvent and a chelating agent, are preferably added to the seed latex, and the reaction is carried out under suitable reaction conditions of sufficient pressure, temperature, and time, such as under atmospheric pressure, from about 0.5 to about 6 hours at temperatures typically of from about 20 to about 150°C, more preferably from about 40 to about 80° C.

The particle can have a particle size of from about 90 to about 500 nm, and more preferably from about 50 to about 300 nm, wherein the amount of polymer is from about 5 to about 95 weight % and the amount of the acrylic or vinyl resin is from about 95 to about 5 weight %. The emulsion polymerization can be performed according to standard methods: batch polymerization using the monomer dispersion from the beginning; semi-continuous polymerization, wherein part of the monomer mixture is fed continuously or in batches; and continuous polymerization wherein the monomer mixture is fed continuously or in batches in the aqueous polymer dispersion during the reaction.

The surfactant can be anionic, cationic, and/or non-ionic surfactants, and/or amphoteric surfactants. The surfactant can be used separately or in combination with two or more. Examples of the anionic surfactant include esters of higher alcohol sulfates (e.g., sodium salts of alkyl sulfonic acids, sodium salts of alkyl benzenesulfonic acids, sodium salts of succinic acids, sodium salts of succinic acid dialkyl ester sulfonic acids, sodium salts of alkyl diphenylether disulfonic acids). Examples of the cationic surfactant include an alkyl pyridinium chloride or an alkylammonium chloride. Examples of the non-ionic surfactant include polyoxyethylene alkylphenyl ethers, polyoxyethylene alkyl esters, polyoxyethylene alkyl esters, polyoxyethylene alkylphenyl esters, glycerol esters, sorbitan alkylesters, and derivatives thereof. Examples of the amphoteric surfactant include lauryl betaine. Reactive emulsifiers, which are able to copolymerize with the above-mentioned monomers, can also be used (e.g., sodium styrene sulfonate, sodium alkylsulfonate, sodium aryl alkylsulfonate and the like). The amount of surfactant usually used is from about 0.05 to about 5 parts by weight per 100 parts by weight of total polymer particles, though other amounts can be used.

Any kind of initiator which produces radicals suitable for free radical polymerization in aqueous media, preferably for temperatures from about 20 to about 100°C, can be used as the polymerization initiator. They can be used alone or in combination with a reducing agent (e.g., sodium hydrogenobisulfite, sodium thiosulfate, sodium hydrogenosulfite). For example, persulfates and hydrogen peroxide can be used as water-soluble initiators, and cumene hydroperoxide, diisopropyl peroxy carbonate, benzoyl peroxide, 2,2' azobis methylbutanenitrile, 2,2'-azobisisobutyronitrile,1,1'azobiscyclohexane-1 -carbonitrile, isopropylbenzenehydroperoxide can be used as oil-soluble initiators. Preferred initiators include 2,2'azobis methylbutanenitrile and 1,1'azobiscyclohexane-1-carbonitrile. The oil-soluble initiator is preferably dissolved in the monomer mixture or in a small quantity of solvent. The amount of initiator used is preferably from about 0.1 to about 2 parts by weight per 100 parts by weight of the monomer mixture added.

Any suitable type of chain transfer agents can be used, and preferably one that does not considerably slow down the reaction. The chain transfer agents that can be used include, for example, mercaptans (e.g., dodecyl mercaptan, octylmercaptan), halogenated hydrocarbon (e.g., carbon tetrachloride, chloroform), xanthogen (e.g., dimethylxanthogen disulfide), and the like. The quantity of chain transfer agent used is usually from about 0 to about 5 parts by weight per 100 parts by weight of the monomer mixture added.

A small quantity of solvent can be added during the reaction, for instance, in order to help the seed particle swelling (if this is used) by the monomer (and therefore, increase the mixing at a molecular level) and improve film formation. The quantity of solvent added should be in such ranges that workability, environmental safety, production safety, and/or fire hazard prevention are not impaired. The solvents used include for example, acetone, methylethyl ketone, N-methyl pyrrolidone, toluene, dimethylsulfoxide, and the like.

One advantage of the present invention is the introduction of at least one ionic or ionizable moiety, such as a sulfonated moiety, to the polymer by copolymerization of a monomer containing the ionic or ionizable group, optionally with other monomers, in the presence of a polymer aqueous dispersion. Consequently, in the present invention, the ionic or ionizable functionality is chemically bonded to the polymer chain via polymerization thus avoiding grafting techniques.

In addition, the present invention optionally permits an intimate blending of two or more polymers in the dispersion (e.g., aqueous dispersion), preferably through the use of the seeded polymerization method or methods. Accordingly, the resulting resin can be an intimate blend of at least one polymer and at least one polymer bearing the ionic or ionizable group. Thus, the need for grafting techniques can be avoided as well as the need to use environmentally unfriendly solvent solutions. Moreover, there is no need for post-sulfonation of the resin using acids such as sulfuric and sulfonic acids or derivatives thereof, since the ionic or ionizable group, e.g., the sulfonated group, is already on the monomer. Furthermore, because the ionic or ionizable group is preferably polymerized, its distribution along the polymer chain is easily controlled by conventional means known in the art such as shot addition, continuous feed, late addition, and the like. Consequently, the resulting ionic or ionizable group distribution in a membrane formed from the polymer blend can be more easily controlled than previously. Accordingly, the tailoring of various properties, such as homogeneous, random, heterogeneous, and the like, can be achieved.

Furthermore, due to these various advantages described above, the applications of the present invention can include, but are not limited to, membranes, fuel cells, coatings, ion exchange resins, oil recovery, biological membranes, batteries, and the like.

A polymeric ion membrane or polyelectrolyte membrane can be made from the polymers of the present invention. The polymeric ion membrane can be prepared from conventional film preparation methods, such as melt extrusion, solvent cast, latex cast, and the like. Membrane electrode assemblies can be made from the membranes of the present invention and fuel cells using this membrane electrode assembly can be prepared. In using the polymers of the present invention to form membranes, the polymer can have any equivalent weight and preferably has an equivalent weight of from about 200 to about 4,000, and preferably from about 200 to about 1,500 and even more preferably from about 200 to about 1,400, with respect to the ionic acrylic or vinyl resin present in the polymer.

In more detail, the compositions of the present invention are especially useful in fuel cells, batteries, and the like. The design and components used in the fuel cell and batteries would be the same as in conventional fuel cells and batteries except using the compositions of the present invention in the formation of the polymeric ionic exchange membrane. Accordingly, the designs and manners of making the fuel cells and batteries as described in U.S. Patent No. 5,795,668 and PCT Publication No. WO 98/22989 as well as WO 98/20573 can be used in the present invention and are fully incorporated herein in their entireties by reference. The membrane can be used alone or with conventional fillers, such as silica and the like. The fuel cell may use a liquid or gaseous fuel such as a liquid hydrocarbon like methanol. The fuel cell of the present invention is capable of operating at a wide range of operating conditions. The fuel cell of the present invention can have a porous support layer and an ion exchange resin wherein the ion exchange resin is supported on at least one side of the porous support layer. The present invention can be useful in direct methanol fuel cells or other fuel cells. Preferably, the fuel cells of the present invention have low fuel crossover, high electric conductivity, and/or high mechanical strength. The thickness of the membrane can be conventional but is preferably from about 1 to about 10 mils and more preferably from about 3 mils to about 5 mils. Further, the membrane preferably has an equivalent weight of from about 200 to about 2500, and more preferably about 200 to about 1400. The porous support layer can be made from any conventional material such as a fluoro-containing polymer or other hydrocarbon containing polymers such as polyolefin. The porous support layer has conventional parameters with respect to pore diameter, porosity, and thickness. The fuel cells of the present invention preferably have excellent electrical properties and relatively low electrical resistance.

The present invention will be further clarified by the following examples which are intended to be purely exemplary of the present invention.

### EXAMPLES

In all the tables, the quantities of monomer are given in parts by weight, unless otherwise specified.

The compositions of the present invention were made using the following materials and reaction conditions:

### Raw Materials

Monomers (ATOFINA Chemicals, Inc., Aldrich), Initiators (Aldrich, DuPont), Surfactants (Aldrich) and buffers (Aldrich) were used without further purification.

### Reaction

Ammonium persulfate 0.3 g, sodium lauryl sulfate 1 g, and deionized water 300 g were pre-charged in a 500 ml four neck kettle fitted with a condenser, high purity nitrogen and monomer inlets, and mechanical stirrer. The reactor was heated up to 65° C and the monomer mixture [Methyl Methacrylate (MMA) 46 g, and sulfopropyl methacrylate 9 g ] was fed into the reactor at the desired rate using a syringe pump. Optionally a part of monomer mixture can be added in the pre-charge, prior to the reaction period. The residual monomer was then polymerized by maintaining the reaction temperature and agitation for 120 minutes. Then, the medium was cooled to room temperature, vented, and the final dispersion was filtered through a cheese cloth. The final solids content was 15 wt%.

**Table 1:**

| Representative synthetic data of resin containing sulfonated monomer. | | | | | | | | |
|---|---|---|---|---|---|---|---|---|
| Example | MMA | TPMS | BA | S | IBMA | HEMA | SPM | EW |
| 1 | 56.6 | | 24 | | 2.2 | | 17.2 | 1140 |
| 2 | 40 | | 39 | | 2.4 | | 18.5 | 1330 |
| 3 | 28.6 | | 19 | 19 | | 9.5 | 23.8 | 1035 |
| 4 | 31.5 | | 21.1 | 21.1 | | 10.5 | 15.8 | 1560 |
| 5 | 28.6 | | 19 | 19 | | 9.5 | 23.8 | 1035 |
| 6 | 31.7 | | 21 | 21 | | 10.5 | 15.8 | 1560 |
| 7 | 31.6 | | 21 | 21 | | 10.5 | 15.8 | 1535 |
| 8 | 39.9 | | 39.2 | | 2.4 | | 18.5 | 1330 |
| 9 | 37.8 | 3.4 | 11.8 | 27.5 | | | 19.5 | 1266 |
| 10 | 33 | | 32.5 | | 2 | | 32.5 | 758 |

**Table 2:**

| Examples of Proton conductivity measurements | | |
|---|---|---|
| Example | Casting Type | Proton Conductivity mS/cm |
| 5 | Latex Cast | 25 |
| 6 | Latex Cast | 34 |
| 7 | Latex Cast | 22 |
| 8 | Latex Cast | 13 |
| 9 | Solvent Cast | 20 |
| 10 | Solvent Cast | 60 |
| 2 | Solvent Cast | 9 |

### Experimental:

Conductivity measurements were performed with a four probe configuration by Electrochemical Impedance Spectroscopy. The measurements were carried out between 5X10⁵ and 1 Hz with a Gamry instrument (Potensiostat - Galvanostat ZRAPC4/750 and EIS 300 software). The values presented here have been obtained under immersed conditions at room temperature.

### Formulations were prepared as follows:

The formulation of latexes was conducted as follows:

2 g of Baybond 116 and 1 g of Acrysol 275 were dissolved in 4 g of TPM. The solution was mixed with 2 g of TEP, and the resulting solution was added slowly under constant stirring to 100 g of latex.

The films were cast on glass substrates using a blade type applicator and cured in an oven at temperatures ranging from 80° C to 100° C, for 1 to 15 minutes.

The solvent formulations were prepared as follows:

The acrylic latexes were dried and the resulting powder recovered. Then, 10 to 20 g of acrylic powders were dissolved in 100 g DMSO. Desmodur BL-3175A was added to the DSMO solution at various isocyanate hydroxyl ratios to get the maximum crosslinking efficiency. Dibutyltin dilaurate was used to catalyze the isocyanate crosslinking.

Crosslinkers for this system could include blocked isocyanates, free isocyanates, melamines, silanes, epoxies, or carboxylic acids. Catalyst would be chosen for the specific crosslinking chemistry but would most commonly be organotins, sulfonic acids, or amines.

The films were cast on glass substrates using a blade type applicator and cured in an oven at temperatures ranging from 150 C to 200 C, for 1 to 15 minutes.
Baybond 116 is waterborne crosslinker based on hexamethylene di-isocyanate from Bayer.
Acrysol 275 is hydrophobically modified ethylene-oxide based urethane block copolymer (HEUR) from Rohm & Haas.
Desmodur BL-3175A is a hexamethylene diisocyanate oligomer blocked with methyl ethyl ketoxime, and is a product of Bayer Corp.

| Legend: | |
|---|---|
| MMA | methyl methacrylate |
| TPMS | tri-isopropoxy silane methacrylate |
| S | styrene |
| HEMA | hydroxyethyl methacrylate |
| IBMA | isobutoxy methacrylamide |
| SPM | sulfopropyl methacrylate |
| BA | butyl acrylate |
| TPM | triethylene glycol monomethyl ether |
| TEP | tri-ethyl phosphate |
| DSMO | dimethyl sulfoxide |

## Claims

1. A non-perfluorinated polyelectrolyte comprising:
a) at least one acrylic and/or vinyl resin or both having at least one ionic or ionizable group; and having an EW of from about 200 to about 4000, and optionally
b) at least one additional polymer, wherein a) and b) are different.

2. The non-perfluorinated polyelectrolyte of claim 1, wherein said non-perfluorinated polyelectrolyte is a copolymer.

3. The non-perfluorinated polyelectrolyte of claim 1, wherein said non-perfluorinated polyelectrolyte comprises polymers of acrylic acids, methacrylic acids, esters of these acids, or acrylonitrile.

4. The non-perfluorinated polyelectrolyte of claim 1, wherein said non-perfluorinated polyelectrolyte comprises ethyl acrylate, methyl acrylate, butyl acrylate, propyl acrylate, butyl acrylate, amyl acrylate, 2-ethylhexyl acrylate, hexyl acrylate, fluoroalkyl acrylate, or combinations thereof.

5. The non-perfluorinated polyelectrolyte of claim 1, wherein said ionic or ionizable group is a sulfonated group or a phosphonated group or both.

6. The non-perfluorinated polyelectrolyte of claim 1, wherein said additional polymer is present and is a core and said acrylic and/or vinyl resin at least partially coats said core.

7. The non-perfluorinated polyelectrolyte of claim 1, wherein said at least one acrylic and/or vinyl resin or both having at least one ionic or ionizable group is formed by polymerizing at least one acrylic and/or vinyl or both containing monomer, at least one co-polymerizable monomer, at least one monomer having at least one functional group, and at least one monomer having ionic or ionizable groups, wherein each monomer is different from one another.

8. The non-perfluorinated polyelectrolyte of claim 7, wherein said monomer having ionic or ionizable groups is a sulfonated or phosphonated monomer.

9. The non-perfluorinated polyelectrolyte of claim 1, wherein said acrylic resin or vinyl resin is a homopolymer.

10. The non-perfluorinated polyelectrolyte of claim 1, wherein said acrylic resin or vinyl resin is a copolymer.

11. The non-perfluorinated polyelectrolyte of claim 7, wherein said acrylic resin comprises polymers of acrylic acid, alkyl esters, and methacrylic acid alkyl ester.

12. The non-perfluorinated polyelectrolyte of claim 3, wherein said methacrylic acid ester comprises ethyl methacrylate, methyl methacrylate, butyl methacrylate, propyl methacrylate, isobutyl methacrylate, amyl methacrylate, 2-ethylhexyl methacrylate, hexyl methacrylate, fluoroalkylmethacrylate, or combinations thereof.

13. The non-perfluorinated polyelectrolyte of claim 7, wherein said co-polymerizable monomer comprises isobutyl methacrylamide, glycidyl methacrylate, diethylene glycol dimethacrylate, or trimethyloxysilane methacrylate.

14. The non-perfluorinated polyelectrolyte of claim 7, wherein said monomer having at least one functional group comprises α, β unsaturated carboxylic acids vinyl ester compounds, amide compounds, monomers containing hydroxyl group, monomers containing epoxy groups, monomers containing silanols, monomer containing aldehydes, alkenyl cyanides.

15. A polyelectrolyte membrane comprising a non-perfluorinated polyelectrolyte, wherein said non-perfluorinated polyelectrolyte comprises at least one acrylic or vinyl resin or both having at least one ionic or ionizable group.

16. The polyelectrolyte membrane of claim 15, wherein said non-perfluorinated polyelectrolyte has an equivalent weight of from about 200 to about 4,000.

17. The polyelectrolyte membrane of claim 15, wherein said non-perfluorinated polyelectrolyte further comprises at least one additional polymer.

18. A membrane electrode assembly comprising the polymeric ion membrane of claim 15.

19. A fuel cell comprising the membrane electrode assembly of claim 18.

20. A fuel cell comprising anode and cathode compartments separated by a polyelectrolyte membrane, wherein said membrane comprises a non-perfluorinated polyelectrolyte wherein said non-perfluorinated polyelectrolyte comprises at least one acrylic and/or vinyl resin or both having at least one ionic or ionizable group.

21. The fuel cell of claim 20, wherein said membrane further comprises at least one filler.

22. The fuel cell of claim 20, further comprising at least one porous support layer which is embedded in said membrane.

23. The fuel cell of claim 20, wherein said fuel cell operates with a liquid hydrocarbon fuel.

24. The fuel cell of claim 20, wherein the fuel cell operates with a methanol fuel.

25. A battery comprising anode and cathode compartments separated by a polyelectrolyte membrane, wherein said membrane comprises a non-perfluorinated polyelectrolyte wherein said non-perfluorinated polyelectrolyte comprises at least one acrylic and/or vinyl resin or both having at least one ionic or ionizable group.

26. A method of making the composition of claim 1 comprising blending:
a) at least one polymer comprising acrylic units, vinyl units, or both and at least one ionic or ionizable group; and
b) at least one additional polymer, wherein a) and b) are different.

27. The method of claim 26, wherein said blending is accomplished by melt or extrusion blending, latex blending or solvent blending.

28. The method of claim 26, wherein a) polymer is prepared by emulsion, bulk, or solution polymerization.

29. A membrane comprising the polymer of claim 1.

30. A composition comprising the polymer product of polymerizing a) at least one polymerizable acrylic, or vinyl containing monomer, or both, and at least one monomer comprising at least one ionic or ionizable group, or both; b) in the presence of a dispersion of at least one additional polymer capable of dispersing in a medium, where said polymer product has an equivalent weight of from about 200 to about 4,000.

31. The composition of claim 30, wherein said equivalent weight is from about 200 to about 1,400.

32. The non-perfluorinated polyelectrolyte of claim 1, wherein said non-perfluorinated polyelectrolyte has an equivalent weight of from about 200 to about 4,000.

33. The polyelectrolyte membrane of claim 15, wherein said non-perfluorinated polyelectrolyte has an equivalent weight of from about 200 to about 1,500.

34. The non-perfluorinated polyelectrolyte of claim 1, wherein said additional polymer is present.
